## Europäisches Patentamt
## European Patent Office
## Office européen des brevets

(11) Veröffentlichungsnummer: **0 030 005**
**B1**

(12) **EUROPÄISCHE PATENTSCHRIFT**

(45) Veröffentlichungstag der Patentschrift:
27.07.83

(21) Anmeldenummer: 80107394.1

(22) Anmeldetag: 26.11.80

(51) Int. Cl.³: **H 04 J 3/12, H 04 B 12/04**

(54) Schaltungsanordnung in einem Nachrichtenübertragungssystem mit Deltamodulation.

(30) Priorität: 30.11.79 DE 2948307

(43) Veröffentlichungstag der Anmeldung:
10.06.81 Patentblatt 81/23

(45) Bekanntmachung des Hinweises auf die Patenterteilung:
27.07.83 Patentblatt 83/30

(84) Benannte Vertragsstaaten:
AT BE CH FR GB IT LI LU NL SE

(56) Entgegenhaltungen:
**DE-A-2 827 615**
**DE-B-2 813 798**
**FR-A-2 396 464**

(73) Patentinhaber: **SIEMENS AKTIENGESELLSCHAFT,**
**Berlin und München Wittelsbacherplatz 2,**
**D-8000 München 2 (DE)**

(72) Erfinder: **Metzger, Erich, Dipl.-Ing., Echterstrasse 16a,**
**D-8000 München 71 (DE)**
Erfinder: **Retzow, Uwe, Dipl.-Ing., Gräfelfinger**
**Strasse 92, D-8000 München 70 (DE)**

BUNDESDRUCKEREI BERLIN

## Schaltungsanordnung in einem Nachrichtenübertragungssystem mit Deltamodulation

Die Erfindung betrifft eine Schaltungsanordnung in einem Nachrichtenübertragungssystem mit Deltamodulation, insbesondere Zeitmultiplex-Nachrichtenübertragungssystem, mit einem sendeseitigen Hilfssignalgenerator für die Übertragung von Signalisierzeichen, bestehend aus einem eine Verknüpfungslogik aufweisenden rückgekoppelten n-stufigen Schieberegister zur Erzeugung eines Bitmusters mit der maximalen Periodenlänge $2^n-1$, bei der der Hilfssignalgenerator bei Bedarf anstelle der Nutzsignalquelle über einen sendeseitigen Umschalter an den Übertragungskanal anschaltbar ist, bei der ferner eine Signalisierzeichenauswerteschaltung vorgesehen ist, die ebenfalls eine Verknüpfungslogik mit einem n-stufigen Schieberegister aufweist, sowie ein EXCLUSIV-ODER-Gatter, dessen erster Eingang mit dem Ausgang der Verknüpfungslogik und dessen zweiter Eingang gemeinsam mit dem Eingang des n-stufigen Schieberegisters den Eingang der Signalisierzeichenauswerteschaltung bildet, bei der ferner die Signalisierzeichenauswerteschaltung einen Integrator mit ausgangsseitiger erster Schwellwertschaltung umfaßt, der eingangsseitig wahlweise über einen ersten empfangsseitigen Umschalter mit dem Ausgang des EXCLUSIV-ODER-Gatters oder einer Taktquelle verbindbar ist und bei der der empfangsseitige erste Umschalter mittels einer Koinzidenzschaltung derart gesteuert ist, daß er bei einer vorgegebenen Zahl von gleichen aufeinanderfolgenden Bits für die Dauer dieses Zustandes die Taktquelle an den Integratoreingang anschaltet.

Bei Nachrichtenübertragungssystemen mit Deltamodulation werden vom Sender zum Empfänger sowohl deltamodulierte Sprachsignale als auch Signalisierzeichen übertragen. Für die Übertragung der Signalisierzeichen wird ein Inslotsignalisierverfahren angewendet, bei dem die Signalisierzeichen eines Sprachkanals in codierter Form in denselben Kanal (Zeitschlitz) eingeblendet werden, in dem sonst die zugehörigen deltamodulierten Sprachsignale übertragen werden. Zur Übertragung von Signalisierzeichen ist es üblich, während der Dauer der Zeichen fortlaufend ein bestimmtes Codewort, Rufwort genannt, in den Übertragungskanal einzublenden. Während einer solchen Einblendung wird das digitale Sprachsignal unterdrückt. Eine Rufworterkennungsschaltung auf der Empfangsseite meldet erst dann das Vorhandensein eines Rufzeichens, wenn das Rufwort eine bestimmte Mindestzeit, z. B. 5 ms, ununterbrochen empfangen wird. Auf diese Weise wird sichergestellt, daß ein Rufzeichen nicht durch Sprachsignale vorgetäuscht wird.

Aus der DE-A-2 729 633 bzw. der FR-A-2 396 464 ist eine derartige Rufwort-Erkennungs-Schaltung bekannt. Sie weist sendeseitig einen Hilfssignalgenerator auf, der aus einem eine Verknüpfungslogik aufweisenden rückgekoppelten n-stufigen Schieberegister zur Erzeugung eines Bitmusters für die Signalisierzeichen mit der maximalen Periodenlänge $2^n-1$ besteht, wobei der Hilfssignalgenerator bei Bedarf anstelle der die Sprachsignale abgebenden Nutzsignale über einen sendeseitigen Umschalter an den Übertragungskanal anschaltbar ist. Empfangsseitig ist an den ankommenden Übertragungskanal eine Signalisierzeichenauswerteschaltung fest angeschaltet, die ein von der gleichen Verknüpfungslogik wie der Hilfssignalgenerator Gebrauch machendes n-stufiges Schieberegister aufweist, sowie ein EXCLUSIV-ODER-Gatter, dessen erster Eingang mit dem Ausgang der Verknüpfungslogik und dessen zweiter Eingang gemeinsam mit dem Eingang des Schieberegisters den Eingang der Signalisierzeichenauswerteschaltung bildet. Außerdem umfaßt die Signalisierzeichenauswerteschaltung einen Integrator mit ausgangsseitiger Schwellwertschaltung, der eingangsseitig wahlweise über einen empfangsseitigen Umschalter mit dem Ausgang des EXCLUSIV-ODER-Gatters oder einer Taktquelle verbindbar ist und dabei der empfangsseitige Umschalter über das Schieberegister mittels einer Koinzidenzschaltung derart gesteuert ist, daß er bei wenigstens $n+1$ gleichen aufeinanderfolgenden Bits für die Dauer dieses Zustandes die Taktquelle an den Integratoreingang anschaltet.

Der Zweck dieser Schaltung liegt darin, die bei der empfangsseitigen Auswertung der Signalisierzeichen auftretenden, auf das Nutzsignal zurückgehenden Zeichenverzerrungen zu vermindern.

Zwar sorgt diese bekannte Schaltungsanordnung dafür, daß Signalisierzeichen bzw. Rufzeichen nicht durch Sprachsignale vorgetäuscht werden, doch können einige wenige Bitfolgen, die bei der Deltamodulation durch Meßtöne bestimmter Amplitude und Frequenz entstehen, zur Vortäuschung eines Signalisierzeichens und damit zu einer Fehlsignalisierung führen, wenn diese Bitfolgen ausreichend lange (ca. 6 ms) vorhanden sind.

Der Erfindung liegt die Aufgabe zugrunde, in einem Nachrichtenübertragungssystem mit Deltamodulation den Mangel bisheriger Schaltungsanordnungen zur Rufworterkennung durch ergänzende Maßnahmen auf der Empfangsseite zu beseitigen, so daß es mit Sicherheit weder durch deltamodulierte Sprachsignale noch durch deltamodulierte Meßtöne bestimmter Frequenz und Amplitude zu einer Vortäuschung von Signalisierzeichen kommen kann.

Diese Aufgabe wird erfindungsgemäß dadurch gelöst, daß der Signaleingang des empfangsseitigen n-stufigen Schieberegisters wahlweise mit dem ankommenden Signal oder dem Ausgang der Verknüpfungslogik über einen empfangsseitigen zweiten Umschalter verbindbar ist, daß ferner dieser zweite Umschalter vom Ausgang des Integrators über eine zweite Schwellwertschaltung hinweg ansteuerbar ist und daß in der ankommenden Signalleitung vor dem zweiten Umschalter ein weiteres Schieberegister angeordnet ist, über dessen Stufenausgänge die Koinzidenzschaltung gesteuert ist.

Der Erfindung liegt die Erkenntnis zugrunde, daß die Vortäuschung eines Signalisierzeichens wesentlich vermindert wird, wenn das auf dem Übertragungskanal ankommende Signal auf der Empfangsseite zunächst nach einer bestimmten Art decodiert wird und bei Erreichen einer Schwelle, die den Empfang eines Rufwortes vermuten läßt, durch Schließen des Rückkopplungskreises für das empfangsseitige, die Verknüpfungslogik aufweisende Schieberegister und einer dadurch ausgelösten, von der Sendeseite unabhängigen, empfangsseitigen Erzeugung des Rufwortes und anschließendem Vergleich dieses Rufwortes mit den empfangenen Bitfolgen auf eine andere Art der Decodierung umgeschaltet wird.

An sich ist es, wie beispielsweise die DE-A-2 729 663 ausweist, bekannt, für Synchronisierzwecke einen zur Sendeseite identischen Bitmustergenerator in Form eines über einen Umschalter rückkoppelbaren Schieberegisters zu verwirklichen. Doch weist die erfindungsgemäße Schaltungsanordnung hierzu den wesentlichen Unterschied auf, daß vor diesem Umschalter ein weiteres Schieberegister zur Steuerung der Koinzidenzschaltung angeordnet ist, und daß Inslot-Signalisierzeichen nur bedarfsweise in den Übertragungskanal eingeblendet werden und deshalb die Rückkopplungsschleife nur bei der Vermutung des Empfangs eines Rufwortes geschlossen wird.

In einer weiteren Ausgestaltung der Erfindung ist vorgesehen, daß die Schwelle der zweiten Schwellwertschaltung zur Steuerung des weiteren Umschalters, bezogen auf den Mittelwert der Integratorausgangsgröße, näher an diesem Mittelwert liegt als die Schwelle der ersten Schwellwertschaltung.

Anhand eines Ausführungsbeispieles wird die Erfindung nachstehend näher erläutert. Es zeigt

Fig. 1 ein Blockschaltbild der Sende- und Empfangsseite nach der Erfindung,

Fig. 2 detaillierte Darstellung der empfangsseitigen Signalisierzeichenauswerteschaltung nach der Erfindung,

Fig. 3 Spannungsverlauf am Integratorausgang der empfangsseitigen Signalisierzeichenauswerteschaltung bei der periodisch ankommenden digitalen Bitfolge 110010.

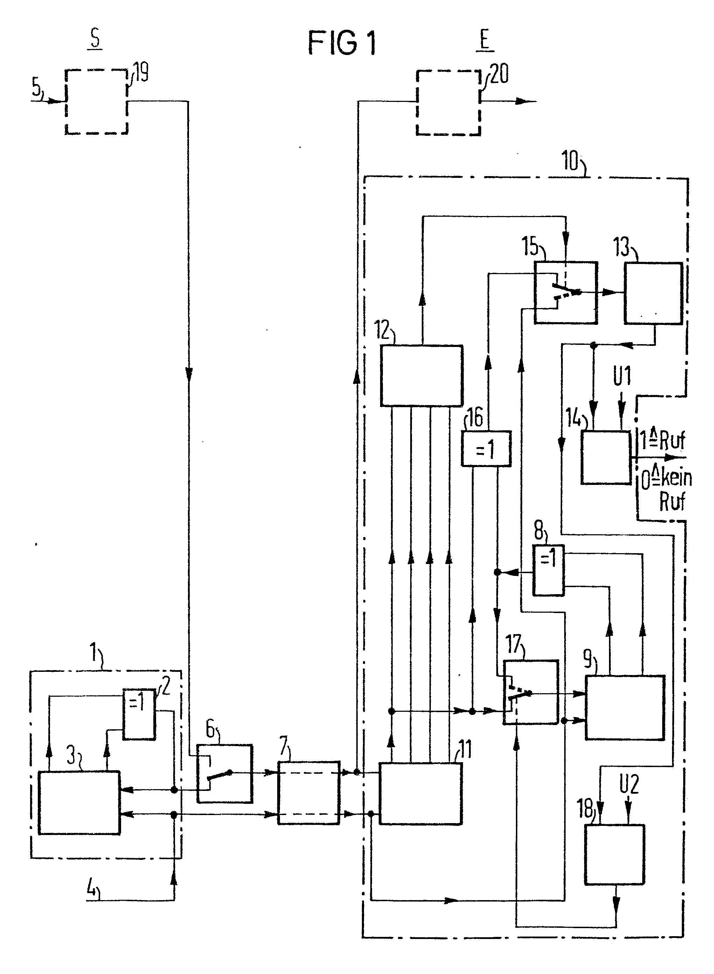

Das in Fig. 1 dargestellte Blockschaltbild zeigt auf der linken Seite den Sender S und auf der rechten Seite den Empfänger E des einen Nachrichtenübertragungskanal 7 aufweisenden mit Deltamodulation arbeitenden Nachrichtenübertragungssystems für Sprachübertragung. Der Sender S weist einen Umschalter 6 auf, der in seiner einen Schaltstellung über den Deltamodulator 19 mit der die Sprachsignale abgegebenen Nutzsignalquelle 5 und in seiner anderen Schaltstellung mit einem Hilfssignalgenerator 1 verbindbar ist. Der Hilfssignalgenerator 1 besteht aus einem vierstufigen Schieberegister 3 und einer Verknüpfungslogik in Form eines EXCLUSIV-ODER-Gatters 2, über dessen Ausgang das Schieberegister 3 durch Verbindung mit seinem ersten Eingang rückgekoppelt ist, während an den zweiten Eingang des Schieberegisters 3 eine Taktquelle 4 angeschlossen ist. Von dem sendeseitigen Umschalter 6 aus gelangen die Informationen des Senders S über den Übertragungskanal 7 zum Empfänger E, der aus einem Deltademodulator 20 für die Sprachsignale und einer Signalisierzeichenauswerteschaltung 10 für die Signalisierzeichen besteht.

Die Signalisierzeichenauswerteschaltung 10 besteht aus einer Verknüpfungslogik 8 mit einem vierstufigen Schieberegister 9. Sie weist weiterhin einen Integrator 13 auf, der eingangsseitig wahlweise über einen von einer Koinzidenzschaltung 12 gesteuerten Umschalter 15 mit dem Ausgang eines EXCLUSIV-ODER-Gatters 16 oder der Taktquelle 4 verbindbar ist. Der Integrator 13 ist ausgangsseitig mit zwei Schwellwertschaltungen 14, 18 verbunden, wobei die eine Schwellwertschaltung 14 zur Meldung von Signalisierzeichen vorgesehen ist, während die andere Schwellwertschaltung 18 in Abhängigkeit des Integratorausgangssignals einen zweiten Umschalter 17 steuert, der in seiner einen Schaltstellung den Rückkopplungskreis des vierstufigen Schieberegisters 9 über den Ausgang der Verknüpfungslogik 8 schließt und in seiner anderen Schaltstellung den Signaleingang dieses Schieberegisters 9 mit dem Übertragungskanal 7 in Verbindung bringt. Den beiden Eingängen des EXCLUSIV-ODER-Gatters 16 sind das in dem Übertragungskanal 7 ankommende Signal sowie das Ausgangssignal der ebenfalls aus einem EXCLUSIV-ODER-Gatter bestehenden Verknüpfungslogik 8 zugeführt. Vor dem zweiten Umschalter 17 ist ein an den ankommenden Übertragungskanal 7 fest angeschaltetes weiteres Schieberegister 11 angeordnet, dessen Stufenausgänge mit einer entsprechenden Zahl von Eingängen der Koinzidenzschaltung 12 verbunden sind.

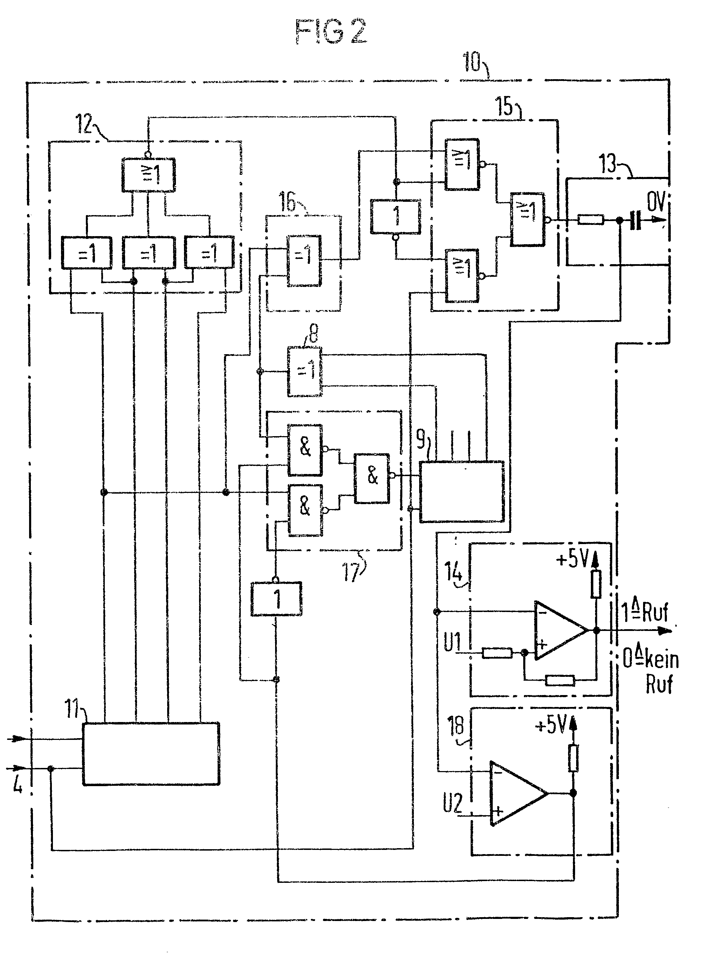

In Fig. 2 ist die Empfangsseite des Nachrichtenübertragungssystems nach Fig. 1 in einer detaillierteren Form dargestellt. Man erkennt, daß die beiden Umschalter 15, 17 und die Koinzidenzschaltung 12 mit Gatter-Schaltungen, der Integrator 13 mit einem RC-Glied und die beiden Schwellwertschaltungen 14, 18 jeweils durch einen mit ohmschen Widerständen beschalteten Operationsverstärker realisiert sind.

Die Wirkungsweise der erfindungsgemäßen Schaltungsanordnung nach Fig. 1 und Fig. 2 läßt sich anhand der folgenden Betriebsfälle erläutern:

1. Das ankommende Signal ist ein Rufwort

Die ankommenden Daten gelangen über die erste Zelle des Schieberegisters 11 zum Umschalter 17, der die in Fig. 1 eingezeichnete Schaltstellung aufweist. Vom Umschalter 17 gelangen die Daten zu dem Schieberegister 9, das mit dem sendeseitigen Schieberegister 3 identisch ist und dem die gleiche Bitfolge zugeführt wird, wie dem Register 3 auf der Sendeseite. Am Ausgang der Verknüpfungslogik 8 entsteht deswegen ebenfalls die gleiche Bitfolge wie auf der Sendeseite am Ausgang des EXCLUSIV-ODER-Gatters 2. Dem EXCLUSIV-ODER-Gatter 16 auf der Empfangsseite werden demnach zwei identische Bitfolgen zugeführt, so daß an seinem Ausgang ein Dauersignal logisch 0 entsteht, was das Kriterium für den Empfang eines Rufwortes darstellt. Das Dauersignal logisch 0 gelangt über den Umschalter 15 mit der in Fig. 1 eingezeichneten Schaltstellung an den Eingang des Integrators 13. Die Koinzidenzschaltung 12 spricht alle 15 Bits für die Dauer von einem Bit an und schaltet während dieses einen Bits den Takt 4 auf den Integrator 13. Dem Integrator 13 werden demnach über den Schalter 15 mit der in Fig. 1 eingezeichneten Schaltstellung 14 Nullen und mit der gestrichelt eingezeichneten Schaltstellung eine halbe 0 + eine halbe 1 zugeführt. Das hat zur Folge, daß die Spannung U am Ausgang des Integrators 13 absinkt. Sobald die Integratorausgangsspannung U kleiner ist als die Bezugsspannung U2 der Schwellwertschaltung 18 (U2 = 45% der Versorgungsspannung), löst die Schwellwertschaltung 18 ein Umschalten des Umschalters 17 aus, der nun die in Fig. 1 gestrichelt eingezeichnete Schaltstellung einnimmt. Durch diese Schaltstellung wird das Schieberegister 9 über die Verknüpfungslogik 8 rückgekoppelt. Das Schieberegister 9 erzeugt nun ununterbrochen das 15-Bit-Rufwort auf die gleiche Weise wie das sendeseitige Schieberegister 3 des Hilfssignalgenerators 1, also unabhängig von den jetzt noch ankommenden Bits. Da dieses Signal nach wie vor mit dem ankommenden Rufwort verglichen wird, ergibt sich am Ausgang des EXCLUSIV-ODER-Gatters 16 ein Dauersignal logisch 0. Da dieses Dauersignal logisch 0 über die in Fig. 1 eingezeichnete Schaltstellung des Umschalters 15 mit dem Eingang des Integrators 13 verbunden ist, sinkt die Spannung U am Ausgang des Integrators 13 weiterhin ab, bis der Minimalwert (nahezu 0 V) erreicht ist. Sobald die Spannung U am Integratorausgang kleiner ist als die Bezugsspannung U1 der Schwellwertschaltung 14 (U1 = 25% der Versorgungsspannung), meldet die Schwellwertschaltung 14 mit dem Signal logisch 1: »Ruf«.

## 2. Das ankommende Signal ist ein Dauersignal

Die Koinzidenzschaltung 12 spricht bei ≥ 4 gleichen Bits an und schaltet den Takt 4 (Tastverhältnis 0,5) über die in Fig. 1 gestrichelt gezeichnete Schaltstellung des Umschalters 15 direkt auf den Eingang des Integrators 13. Die Ausgangsspannung U des Integrators 13 strebt entsprechend seiner Zeitkonstante einem Wert zu, der 50% der Versorgungsspannung entspricht. Diese Spannung ist damit größer als die Bezugsspannung U1 der Schwellwertschaltung 14. Das Signal logisch 0 am Ausgang der Schwellwertschaltung 14 meldet »kein Ruf«.

## 3. Das ankommende Signal ist weder ein Rufwort noch ein Dauersignal

Der Umschalter 17 weist zunächst die in Fig. 1 eingezeichnete Schaltstellung auf. Über den Umschalter 17 des Schieberegisters 9 und die Verknüpfungslogik 8 gelangen die Signale zu dem EXCLUSIV-ODER-Gatter 16, dessen Ausgang ein Signal mit Nullen und Einsen liefert. Das Verhältnis von Nullen zu Einsen hängt von dem über die erste Zelle des Schieberegisters 11 ankommenden Signal ab. Enthält das Signal am Ausgang des EXCLUSIV-ODER-Gatters 16 kurzzeitig mehr Nullen als Einsen, so wird dies über die in Fig. 1 eingezeichnete Schaltstellung des Umschalters 15 dem Integrator 13 gemeldet, dessen Spannung U an seinem Ausgang sinkt. Sobald die Schwelle der Bezugsspannung U2 (U2 = 45% der Versorgungsspannung) der Schwellwertschaltung 18 erreicht ist, bringt die Schwellwertschaltung 18 den Umschalter 17 in die gestrichelt eingezeichnete Schaltstellung zur Schließung des Rückkopplungskreises für das Schieberegister 9. Auf diese Weise wird das in dem Übertragungskanal 7 ankommende Signal wieder mit dem empfangsseitigen erzeugten Rufwort verglichen.

Bei einem ankommenden deltamodulierten Sprachsignal, das 50% Nullen und 50% Einsen enthält, entstehen am Ausgang des EXCLUSIV-ODER-Gatters 16 im Mittel ebenfalls 50% Nullen und 50% Einsen, die über den Umschalter 15 zum Integrator 13 gelangen. Die Integratorausgangsspannung U schwankt um den 50%-Wert, und der Umschalter 17 wird über die Schwellwertschaltung 18 zufallsähnlich von einer Schaltstellung auf die andere gebracht. Das ständige Umschalten des Umschalters 17 ändert nichts an der richtigen Ruferkennung der Schwellwertschaltung 14, die mit ihrem Signal logisch 0 signalisiert: »kein Ruf«.

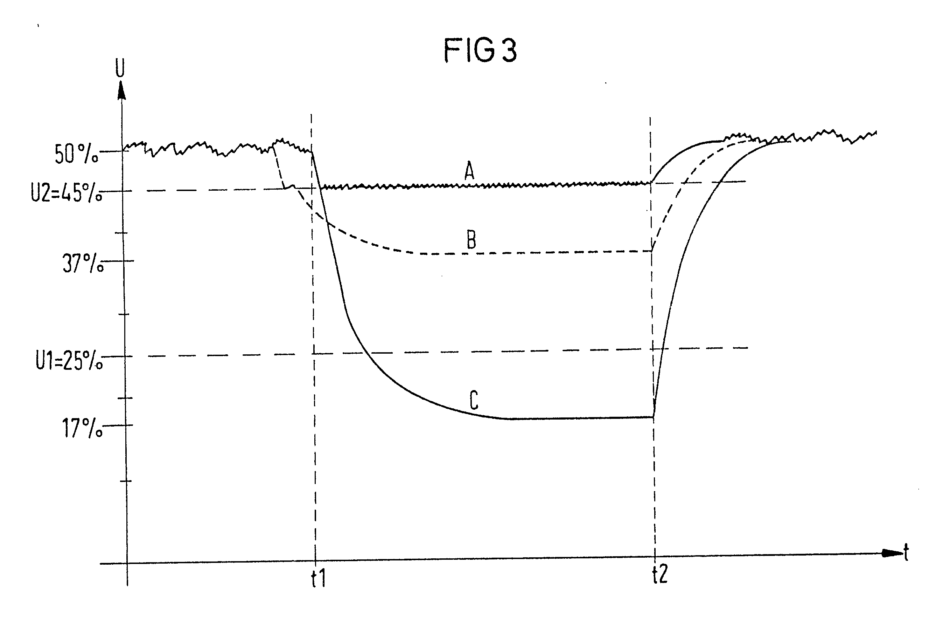

Bei wenigen Bitfolgen, wie z. B. das 6-Bit-Wort 110010, die bei der Deltamodulation durch Meßtöne bestimmter Amplitude und Frequenz entstehen können, zeigt sich der Unterschied zu bisher bekannten Schaltungsanordnungen (Fig. 3). Ausgehend von der in Fig. 1 eingezeichneten Schaltstellung des Umschalters 17 bleibt bei der ankommenden Folge 110010 das Verhältnis von Nullen und Einsen am Ausgang des EXCLUSIV-ODER-Gatters 16 und somit am Eingang des Integrators 13 nicht mehr 50% zu 50%: es entstehen 5 Nullen (83%) und eine Eins (17%). Während dies bisher zu einer Fehlsignalisierung der Schwellwertschaltung 14 führte, bedingt durch das Herabsinken der Ausgangsspannung U des Integrators 13 unter die Bezugsspannung U1 der Schwellwertschaltung 14 (U1 = 25%) (Fall C in Fig. 3), schaltet nun die Schwellwertschaltung 18 bei Herabsinken der Integratorausgangsspannung U unter die Bezugsspannung U2 der Schwellwertschaltung 18 (U2 = 45%) den Umschalter 17 in die gestrichelt eingezeichnete Schaltstellung zur Schließung der Rückkopplungsschleife für das Schieberegister 9. Bei Schließung dieser Rückkopplungsschleife bzw. der empfangsseitigen Erzeugung des Rufwortes entstehen am Ausgang des Integrators 13 nun 63% Nullen und 37% Einsen.

Liegt zum Zeitpunkt t1 des Überganges auf die Bitfolge 110010 die Spannung U am Integratorausgang oberhalb der 45%-Schwelle, so wird sie im Bereich dieser Schwelle (U2 = 45%) festgehalten, d. h. der Umschalter 17 schaltet zwischen seinen beiden möglichen Schaltstellungen hin und her (Fall A in Fig. 3), befindet sich dagegen die Integratorausgangsspannung U zum Zeitpunkt t1 des Überganges unterhalb der 45%-Schwelle, so sinkt sie auf ca. 37% der Versorgungsspannung ab (Fall B in Fig. 3). Im Fall B liegt die Integratorausgangsspannung U immer noch deutlich über der kritischen 25%-Schwelle, so daß es zu keiner Fehlsignalisierung bzw. keiner Vortäuschung von Signalisierzeichen kommt.

Bei der Umschaltung auf Dauersignal zum Zeitpunkt t2 strebt die Ausgangsspannung U des Integrators 13 für alle drei Fälle A, B, C wieder dem 50%-Wert zu.

## Patentansprüche

1. Schaltungsanordnung in einem Nachrichtenübertragungssystem mit Deltamodulation, insbesondere Zeitmultiplex-Nachrichtenübertragungssystem, mit einem sendeseitigen Hilfssignalgenerator (1) für die Übertragung von Signalisierzeichen, bestehend aus einem eine Verknüpfungslogik aufweisenden rückgekoppelten n-stufigen Schieberegister (3) zur Erzeugung eines Bitmusters mit der maximalen Periodenlänge $2^n-1$, bei der der Hilfssignalgenerator (1) bei Bedarf anstelle der Nutzsignalquelle (5) über einen sendeseitigen Umschalter (6) an den Übertragungskanal (7) anschaltbar ist, bei der ferner eine Signalisierzeichenauswerteschaltung (10) vorgesehen ist, die ebenfalls eine Verknüpfungslogik (8) mit einem n-stufigen Schieberegister (9) aufweist, sowie ein EXCLUSIV-ODER-Gatter (16), dessen erster Eingang mit dem Ausgang der Verknüpfungslogik (8) und dessen zweiter Eingang gemeinsam mit dem Eingang des n-stufigen Schieberegisters (9) den Eingang der Signalisierzeichenauswerteschaltung (10) bildet, bei der ferner die Signalisierzeichenauswerteschaltung (10) einen Integrator (13) mit ausgangsseitiger erster Schwellwertschaltung (14) umfaßt, der eingangsseitig wahlweise über einen ersten empfangsseitigen Umschalter (15) mit dem Ausgang des EXCLUSIV-ODER-Gatters (16) oder einer Taktquelle (4) verbindbar ist und bei der der empfangsseitige erste Umschalter (15) mittels einer Koinzidenzschaltung (12) derart gesteuert ist, daß er bei einer vorgegebenen Zahl von gleichen aufeinanderfolgenden Bits für die Dauer dieses Zustandes die Taktquelle (4) an den Integratoreingang (13) anschaltet, dadurch gekennzeichnet, daß der Signaleingang des empfangsseitigen n-stufigen Schieberegisters (9) wahlweise mit dem ankommenden Signal oder dem Ausgang der Verknüpfungslogik (8) über einen empfangsseitigen zweiten Umschalter (17) verbindbar ist, daß ferner dieser zweite Umschalter (17) vom Ausgang des Integrators (13) über eine zweite Schwellwertschaltung (18) hinweg ansteuerbar ist und daß in der ankommenden Signalleitung vor dem zweiten Umschalter ein weiteres Schieberegister (11) angeordnet ist, über dessen Stufenausgänge die Koinzidenzschaltung (12) gesteuert ist.

2. Schaltungsanordnung nach Anspruch 1, dadurch gekennzeichnet, daß die Schwelle der zweiten Schwellwertschaltung (18) zur Steuerung des weiteren Umschalters (17), bezogen auf den Mittelwert der Integratorausgangsgröße ($\overline{U}$ = 50%), näher an diesem Mittelwert liegt als die Schwelle der ersten Schwellwertschaltung (14).

## Claims

1. Circuit arrangement in a communications transmission system with delta modulation, in particular time multiplex communications transmission system, comprising an auxiliary signal generator (1) at the transmitting end for the transmission of signalling characters, which consists of a feedback n-stage shift register (3), having a linkage logic and serving to produce a bit combination having the maximal period length $2^{n-1}$, wherein the auxiliary signal generator (1) can be connected to the transmission channel (7) via a change-over switch (6) at the transmitting end in place of the useful signal source (5) if required, and wherein furthermore are arranged both a signalling character analysis circuit (10) which also includes a linkage logic (8) having an n-stage shift register (9), and an EXCLUSIVE-OR-gate (16) whose first input together with the output of the linkage logic (8) and whose second input together with the input of the n-stage shift register (9) form the input of the signalling character analysis circuit (10), and wherein furthermore the signalling character analysis circuit (10) comprises an integrator (13) having a first threshold value circuit (14) at the output end, which integrator, at the input end, can be optionally connected via a first receiving-end change-over switch (15) to the output of the EXCLUSIVE-OR-gate (16) or to a clock pulse source (4), and wherein the receiving-end first change-over switch (15) is controlled by means of a coincidence circuit (12) in such manner that in the case of a given number of identical consecutive bits the change-over switch connects the clock pulse source (4) to the integrator input (13) for the duration of this condition, characterised in that the signal input of the n-stage shift register (9) at the receiving end can be optionally connected to the incoming signal or to the output of the linkage logic (8) by means of a receiving-end second change-over switch (17) that furthermore this second change-over switch (17) is controllable from the output of the integrator (13) via a second threshold value circuit (18), and that in the incoming signal line, before the second change-over switch, there is arranged a further shift register (11), by means of whose stage outputs the coincidence circuit (12) is controlled.

2. Circuit arrangement as claimed in claim 1, characterised in that the threshold of the second threshold value circuit (18) which serves to control the further change-over switch (17) is closer to the average of the integrator output magnitude ($\overline{U} = 50\%$) than the threshold of the first threshold value circuit (14).

**Revendications**

1. Montage pour un système de transmission d'informations avec modulation delta, notamment un système de transmission d'informations a multiplexage par répartition dans le temps, comportant un générateur de signaux auxiliaires (1) pour la transmission de signaux caractéristiques de signalisation, qui est constitué par un registre à décalage (3) à n étages à contre-réaction, comprenant un circuit logique combinatoire, pour produire un profil binaire possédant la longueur de période maximale $2^n-1$, dans lequel, en cas de besoin, le générateur de signaux auxiliaires peut être relié au canal de transmission (7) au lieu de la source de signaux utiles (5), par l'intermédiaire d'un inverseur (6) côté émission, dans lequel en outre il est prévu un circuit (10) d'évaluation des signaux caractéristiques de signalisation qui comporte également un circuit logique combinatoire (8) avec un registre à décalage (9) à n étages, ainsi qu'une porte OU exclusif (16) dont la première entrée est reliée à la sortie du circuit logique combinatoire (8), et dont la seconde entrée, commune avec l'entrée du registre à décalage (9) à n étages, forme l'entrée du circuit (10) d'évaluation des signaux caractéristiques de signalisation, dans lequel en outre le circuit (10) d'évaluation des signaux caractéristiques de signalisation comprend un intégrateur (13), relié à un premier circuit à seuil (14) côté sortie, et qui, côté entrée, peut être relié sélectivement, par l'intermédiaire d'un premier inverseur (15) côté réception, à la sortie de la porte OU exclusif (16) ou à une source de cadence (4), et dans lequel le premier inverseur (15) côté réception est commandé au moyen d'un circuit à coïncidence (12) de manière à relier la source de cadence (4) à l'entrée de l'intégrateur (13) dans le cas d'un nombre prédéterminé de bits successifs identiques pour la durée de cet état, caractérisé par le fait que l'entrée de signaux du registre à décalage (9) à n étages côté réception peut recevoir sélectivement le signal d'arrivée ou le signal de sortie du circuit logique combinatoire (8), par l'intermédiaire d'un second inverseur (17) côté réception, qu'en outre ce second inverseur (17) peut être commandé à partir de la sortie de l'intégrateur (13) par l'intermédiaire d'un second circuit à seuil (18), et que dans la ligne de signaux d'arrivée, devant le second commutateur, est disposé un autre registre à décalage (11) dont les sorties des étages commandent le circuit à coïncidence (12).

2. Montage suivant la revendication 1, caractérisé par le fait que le seuil du second circuit à seuil (18) pour la commande de l'autre inverseur (17), rapporté à la valeur moyenne de la grandeur de sortie ($\overline{U} = 50\%$) de l'intégrateur, est plus proche de cette valeur moyenne que le seuil du premier circuit à seuil (14).

# FIG 1

# FIG 2

# FIG 3

0 030 005